# EUROPEAN PATENT APPLICATION

(11) **EP 4 560 926 A1**
(43) Date of publication of application: **28.05.2025**
(21) Application number: 23864627.7
(22) Date of filing: 07.09.2023
(51) Int. Cl.: H04B 1/40

(54) **TRANSCEIVING APPARATUS AND TERMINAL DEVICE**

(30) Priority: 14.09.2022 CN 202211117566
(71) Applicant: Huawei Technologies Co., Ltd., Shenzhen, Guangdong 518129 (CN)
(72) Inventor: HU, Jianyue, Shenzhen, Guangdong 518129 (CN); OU, Songlin, Shenzhen, Guangdong 518129 (CN); HUANG, Xin, Shenzhen, Guangdong 518129 (CN)
(74) Representative: Pfenning, Meinig & Partner mbB
(86) International application number: PCT/CN2023/117496
(87) International publication number: WO 2024/055895

(57) **Abstract**

This application relates to the field of communication technologies, and discloses a transceiver apparatus and a terminal device, to improve transmit power of a satellite communication signal of the terminal device, and reduce a requirement of the terminal device for hardware such as a power amplifier, thereby reducing design difficulty of the terminal device. The transceiver apparatus includes N first satellite communication system transmit paths, N first satellite positioning system receive paths, and N first antennas. The N first antennas are connected to the N first satellite communication system transmit paths and the N first satellite positioning system receive paths in a one-to-one manner, and N is an integer greater than or equal to 1. Each of the N first antennas is configured to send a signal of the connected first satellite communication system transmit path, or is configured to send a signal from a satellite positioning system to the connected first satellite positioning system receive path.

## Description

### CROSS-REFERENCE TO RELATED APPLICATIONS

This application claims priority to Chinese Patent Application No. 202211117566.3, filed with the China National Intellectual Property Administration on September 14, 2022, and entitled "TRANSCEIVER APPARATUS AND TERMINAL DEVICE", which is incorporated herein by reference in its entirety.

### TECHNICAL FIELD

Embodiments of this application relate to the field of communication technologies, and in particular, to a transceiver apparatus and a terminal device.

### BACKGROUND

In a satellite communication scenario, a satellite in a radio navigation satellite system (radio navigation satellite system, RNSS) may broadcast a radio navigation signal, and a terminal device can independently complete ranging and positioning after capturing a sufficient quantity of radio navigation signals broadcast by satellites. A radio determination satellite service (radio determination satellite service, RDSS) is a unique service function of a BeiDou navigation satellite system, and can provide a bidirectional short message service by using a satellite signal. For example, the terminal device may send a message to the satellite through an RDSS transmit link, and the satellite forwards the received message to a ground station, and may parse, based on an RDSS receive link, a message forwarded by the ground station by using the satellite.

The biggest difference between the RDSS and the RNSS lies in that the RDSS has a transmit link, and a high requirement is posed on transmit power because the terminal device needs to communicate with a satellite through a transmitted signal. Currently, in an implementation, an active transceiver antenna is used to send an RDSS signal, so that the sent signal meets a transmit power requirement. However, the active antenna requires an additional power module and a signal amplification module, and is definitely not applicable to a terminal device in a small size, for example, a mobile phone.

### SUMMARY

Embodiments of this application provide a transceiver apparatus and a terminal device, to improve transmit power of a satellite communication signal of the terminal device, and reduce a requirement of the terminal device for hardware such as a power amplifier, thereby reducing design difficulty of the terminal device.

According to a first aspect, an embodiment of this application provides a transceiver apparatus, where the apparatus includes N first satellite communication system transmit paths, N first satellite positioning system receive paths, and N first antennas. The N first antennas are connected to the N first satellite communication system transmit paths and the N first satellite positioning system receive paths in a one-to-one manner, and N is an integer greater than or equal to 1. Each of the N first antennas is configured to send a signal of the connected first satellite communication system transmit path, or is configured to send a signal from a satellite positioning system to the connected first satellite positioning system receive path. Optionally, the first satellite communication system transmit path is an RDSS transmit path, and the first satellite positioning system receive path is an RNSS receive path.

Through the foregoing method, a corresponding quantity of first satellite communication system (for example, RDSS) transmit paths may be disposed based on a strength requirement of a transmit signal, to increase transmit power of the signal, reduce a requirement of the terminal device for hardware such as a power amplifier, and reduce design difficulty of the terminal device. In addition, the first satellite communication system transmit path and a first satellite positioning system (for example, an RNSS) share (or reuse) an antenna, so that a quantity of antennas in the transceiver apparatus can be reduced, and integration costs of the transceiver apparatus can be reduced.

In a possible design, N is less than or equal to 3, and the N first antennas are N of an L1 frequency band antenna, an L2 frequency band antenna, and an L5 frequency band antenna in the satellite positioning system. In this way, a feature that receive frequencies of the L1 frequency band antenna, the L2 frequency band antenna, and the L5 frequency band antenna of the satellite positioning system (for example, the RNSS) are close to a transmit frequency of the first satellite communication system (for example, the RDSS) transmit path can be used, so that the first satellite communication system transmit path reuses an antenna in the first satellite positioning system, thereby reducing system integration costs of the transceiver apparatus.

In a possible design, the transceiver apparatus further includes a local oscillator (local oscillator, LO), and the LO is connected to the N first satellite communication system transmit paths. In this way, the N first satellite communication system transmit paths are connected to a same LO, and the same LO provides a clock signal. This helps the N first satellite communication system transmit paths implement clock synchronization, and meets a clock synchronization requirement of a plurality of transmit paths for transmitting a signal.

In a possible design, the LO is further connected to the N first satellite positioning system receive paths. In this way, the N first satellite communication system transmit paths and the N first satellite positioning system receive paths may share a same LO, so that system integration costs of the transceiver apparatus can be reduced.

In a possible design, the apparatus further includes M second satellite communication system transmit paths and M second antennas, the M second antennas are connected to the M second satellite communication system transmit paths in a one-to-one manner, and M is an integer greater than or equal to 1. Each of the M second antennas is configured to send a signal of the connected second satellite communication system transmit path. In the foregoing design, a satellite communication system transmit path that does not share (or reuse) an antenna with a satellite positioning system receive path may be further disposed, to further meet a signal transmit power requirement of a satellite communication system.

In a possible design, the transceiver apparatus further includes an LO, and the LO is connected to the N first satellite communication system transmit paths and the M second satellite communication system transmit paths. In this way, the N first satellite communication system transmit paths and the M second satellite communication system transmit paths can implement clock synchronization, and meet a clock synchronization requirement of a plurality of transmit paths for transmitting a signal.

In a possible design, the LO is further connected to the N satellite positioning system receive paths. In this way, the N first satellite communication system transmit paths, the M second satellite communication system transmit paths, and the N first satellite positioning system receive paths may share a same LO, so that system integration costs of the transceiver apparatus can be reduced.

According to a second aspect, an embodiment of this application provides a chip, where the chip includes the transceiver apparatus in any one of the first aspect or the possible designs of the first aspect.

According to a third aspect, an embodiment of this application provides a terminal device, where the terminal device includes the transceiver apparatus in any one of the first aspect or the possible designs of the first aspect.

For technical effects that can be achieved in the second aspect and the third aspect, refer to the technical effects that can be achieved in the first aspect. Details are not described herein again.

### BRIEF DESCRIPTION OF DRAWINGS

FIG. 1 is a diagram of an application scenario according to an embodiment of this application;
FIG. 2 is a diagram of a basic operating process of an RNSS according to an embodiment of this application;
FIG. 3 is a diagram of a basic operating process of an RDSS according to an embodiment of this application;
FIG. 4 is a diagram of an RDSS transmit link according to an embodiment of this application;
FIG. 5 is a first diagram of a transceiver apparatus according to an embodiment of this application;
FIG. 6 is a second diagram of a transceiver apparatus according to an embodiment of this application;
FIG. 7 is a third diagram of a transceiver apparatus according to an embodiment of this application;
FIG. 8 is a fourth diagram of a transceiver apparatus according to an embodiment of this application;
FIG. 9 is a fifth diagram of a transceiver apparatus according to an embodiment of this application;
FIG. 10 is a sixth diagram of a transceiver apparatus according to an embodiment of this application;
FIG. 11 is a diagram of transmitting an RDSS signal according to an embodiment of this application; and
FIG. 12 is a diagram of a structure of a terminal device according to an embodiment of this application.

### DESCRIPTION OF EMBODIMENTS

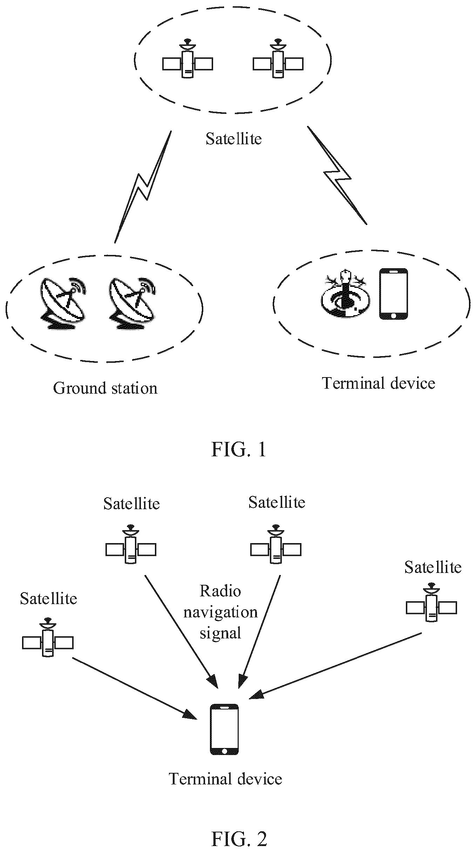

FIG. 1 is a diagram of a possible application scenario according to an embodiment of this application. The application scenario includes a satellite, a ground station, and a terminal device. In this application scenario, the terminal device may send an uplink signal to the satellite, the satellite forwards the uplink signal to the ground station, the ground station may send a downlink signal to the satellite, and the satellite forwards the downlink signal to the terminal device. For example, in this application scenario, a satellite positioning system and a satellite communication system may coexist, the satellite may broadcast a signal (for example, a radio navigation signal) of the satellite positioning system, and the terminal device may complete ranging and positioning based on the signal of the satellite positioning system. The terminal device may also send and receive a signal of the satellite communication system based on the satellite, and communicate with the satellite ground station. It should be noted that a quantity of satellites, a quantity of ground stations, and a quantity of terminal devices in the application scenario shown in FIG. 1 are not limited in this embodiment of this application.

Optionally, the satellite positioning system may be, but is not limited to, a radio navigation satellite system (radio navigation satellite system, RNSS). The RNSS may broadcast a satellite radio navigation signal. After capturing sufficient satellites, the terminal device may independently complete ranging and positioning. The satellite communication system may be, but is not limited to, a radio determination satellite system (radio determination satellite system, RDSS). The RDSS implements a service function of a BeiDou navigation satellite system, and may provide a bidirectional short message information service (that is, a satellite communication function).

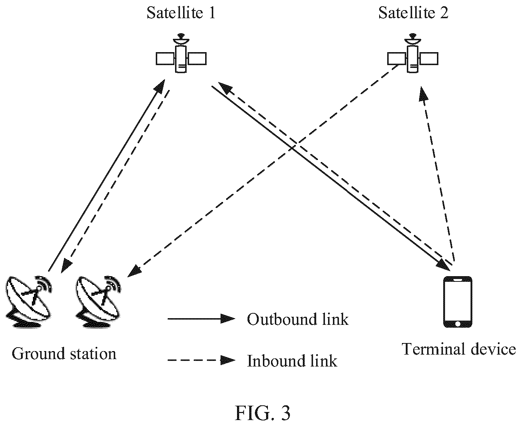

For a basic operating process of the RNSS, refer to FIG. 2. A terminal device may receive radio navigation signals from a plurality of satellites through RNSS receive links to complete positioning (for example, locations of the plurality of satellites and distances between the terminal device and the plurality of satellites are determined based on the received radio navigation signals from the plurality of satellites, to determine a location of the terminal device). For a basic operating process of the RDSS, refer to FIG. 3. When a user needs a communication service, a signal is sent to a satellite through an RDSS transmit link of a terminal device and through an uplink, and the satellite forwards the signal to a ground station through a downlink. The ground station receives a satellite signal, processes user information, and sends to the satellite through the uplink. Then, the satellite forwards communication information to the terminal device through the downlink, and the terminal device receives the communication information through an RDSS receive link.

The terminal device may also be referred to as user equipment (user equipment, UE), a mobile terminal (mobile terminal, MT), or the like, and is a device that provides voice and/or data connectivity for a user. For example, the terminal device may include a handheld device, a vehicle-mounted device, or the like that has a wireless connection function. Currently, the terminal device may be a mobile phone (mobile phone), a tablet computer, a notebook computer, a palmtop computer, a mobile internet device (mobile internet device, MID), a wearable device, a consumption terminal (for example, a watch or a band), a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

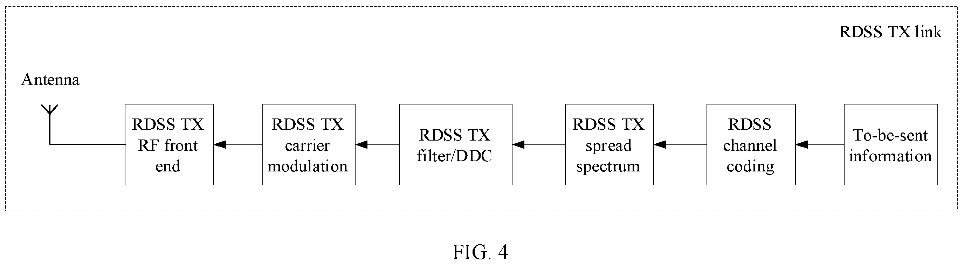

FIG. 4 is a diagram of an RDSS transmit (transmit, TX) link, including an antenna, an RDSS TX radio frequency (radio frequency, RF) front end, an RDSS TX carrier modulation module, an RDSS TX filter/digital data converter (digital data converter, DDC) module, an RDSS TX spread spectrum module, and an RDSS channel coding module.

The RDSS TX carrier modulation module, the RDSS TX filter/digital data converter (digital data converter, DDC) module, the RDSS TX spread spectrum module, and the RDSS channel coding module may form an RDSS baseband signal processing unit.

The RDSS channel coding module may be configured to perform channel coding on to-be-sent information, that is, perform channel coding on an original information bit (bit) stream corresponding to a to-be-sent message edited by a user, to ensure that a receive end obtains a preset channel coding gain through corresponding channel decoding.

The RDSS TX spread spectrum module may be configured to perform spread spectrum modulation processing on symbol data obtained through channel coding.

The RDSS TX filter/DDC module may be configured to: perform shaping and filtering on the modulated signal spectrum, eliminate intercode interference, and shift a center frequency of the signal spectrum to a specified transmit frequency band.

The RDSS TX carrier modulation module performs carrier modulation on the filtered signal to modulate the signal to a specific intermediate frequency.

The RDSS TX RF front end, also referred to as an RDSS transmit path, may be configured to: perform digital-to-analog conversion (digital-to-analog conversion, DAC) on a signal on which intermediate frequency carrier modulation is completed to obtain an analog signal, rely on a radio frequency front-end circuit to up-convert the analog signal to a transmit frequency, and amplify the analog signal to a predetermined power strength by using a power amplifier (power amplifier, PA), and then transmit the signal by using an antenna.

For the terminal device, the biggest difference between the RDSS and the RNSS lies in that the RDSS has a transmit link, and because the transmitted signal needs to communicate with the satellite, a high requirement is imposed on a transmit power. Generally, an equivalent isotropic radiated power (equivalent isotropic radiated power, EIRP) value of the transmitted signal of the terminal device should be not less than 3.5 decibel watts (dBW) and not greater than 19 dBW. For a terminal device such as a mobile phone, even a minimum 3.5 dBW EIRP value needs to be achieved by using a strong PA. Therefore, how to improve signal transmit power is an important requirement of the terminal device such as a mobile phone. However, an active antenna requires an additional power module and a signal amplification module, and is definitely not applicable to a terminal device in a small size, for example, a mobile phone.

In view of this, embodiments of this application provide a transceiver apparatus and a terminal device, to improve transmit power of a satellite communication signal of the terminal device, and reduce a requirement of the terminal device for hardware such as a power amplifier (for example, a PA), thereby reducing design difficulty of the terminal device.

In addition, it should be understood that ordinal numerals such as "first" and "second" in embodiments of this application are used to distinguish between a plurality of objects, and are not intended to limit sizes, content, an order, a time sequence, priorities, or importance degrees of the plurality of objects. For example, a first antenna and a second antenna do not indicate different priorities, importance degrees, or the like corresponding to the two antennas.

In embodiments of this application, unless otherwise specified, a quantity of nouns represents "a singular noun or a plural noun", that is, "one or more". "At least one" means one or more, and "a plurality of" means two or more. The term "and/or" describes an association relationship between associated objects and represents that three relationships may exist. For example, A and/or B may represent the following cases: Only A exists, both A and B exist, and only B exists. A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one item (piece) of a, b, or c may represent: a, b, c, a and b, a and c, b and c, or a, b, and c. Herein, a, b, and c may be singular or plural.

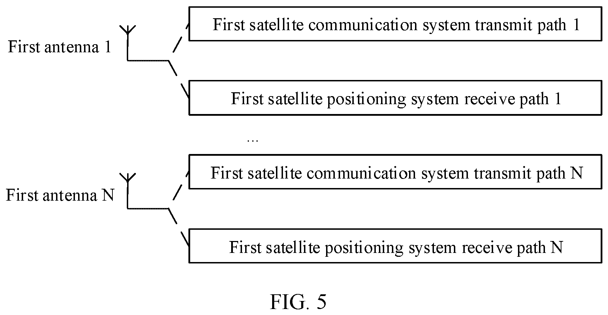

FIG. 5 is a diagram of a transceiver apparatus according to an embodiment of this application. The apparatus includes N first satellite communication system transmit paths, N first satellite positioning system receive paths, and N first antennas. The N first antennas are connected to the N first satellite communication system transmit paths and the N first satellite positioning system receive paths in a one-to-one manner, and N is an integer greater than or equal to 1. Each of the N first antennas is configured to send a signal of the connected first satellite communication system transmit path, or is configured to send a signal from a satellite positioning system to the connected first satellite positioning system receive path. In this way, the first satellite communication system transmit path and the first satellite positioning system receive path may share an antenna, so that a quantity of antennas in the transceiver apparatus can be reduced, thereby reducing a size of the transceiver apparatus and reduces system integration costs of the transceiver apparatus.

In some implementations, the satellite communication system transmit path may be an RDSS transmit path, and the satellite positioning system receive path may be an RNSS receive path. In other words, the first satellite communication system transmit path is a first RDSS transmit path, and the first satellite positioning system receive path is a first RNSS receive path. In the following descriptions, for ease of description, only an example in which the satellite communication system transmit path is the RDSS transmit path and the satellite positioning system receive path is the RNSS receive path is used for description.

The RDSS transmit path may include at least one of the following: a digital-to-analog converter, a filter, a frequency mixer, a local oscillator, a gain controller, and a power amplifier. The RDSS transmit path may implement at least one of the following processing on an RDSS signal: digital-to-analog conversion, filtering, frequency conversion, power gain control, power amplification, and the like.

The RNSS receive path may include at least one of the following: a filter, a low-noise amplifier, a frequency mixer, a local oscillator, a variable-gain amplifier, and an analog-to-digital converter. The RNSS receive path may implement at least one of the following processing on an RNSS signal: filtering, signal amplification, frequency conversion, analog-to-digital conversion, and the like.

The digital-to-analog converter may be implemented by using a digital-to-analog converter (digital-to-analog converter, DAC), and the DAC completes conversion from a digital signal to an analog signal.

The analog-to-digital converter may be implemented by using an analog-to-digital converter (analog-to-digital converter, ADC), and the ADC completes conversion from an analog signal to a digital signal.

The filter may be implemented by using a low-pass filter (low-pass filter, LPF), a surface acoustic wave (surface acoustic wave, SAW) filter, or the like, is configured to complete signal filtering, to suppress impact of an unnecessary signal (for example, an interference signal) on a link, and improve path performance, and the filter may be reused.

The frequency mixer may be implemented by using a MIXER, and the MIXER may be configured to change a signal frequency together with a local oscillator (local oscillator, LO), for example, may be configured to complete up-conversion of the RDSS transmit path, or may be configured to complete down-conversion of the RNSS receive path.

The gain controller may be implemented by using a pulse power amplifier (pulse power amplifier, PPA), and the PPA may be configured to control output signal power of a transmit link.

The power amplifier may be implemented by using a PA, and the PA may be configured to amplify a radio frequency signal of a transmit path.

The variable-gain amplifier may be implemented by using a variable-gain amplifier (variable-gain amplifier, VGA), and the VGC may be configured to perform automatic gain control on an input signal.

The low-noise amplifier may be implemented by using a low-noise amplifier (low-noise amplifier, LNA), and the LNA may be configured to amplify a received signal of the RNSS, to reduce noise interference. An LNA disposed on a chip may be referred to as an internal LNA (internal LNA, iLNA).

It should be understood that implementations of the foregoing components are merely examples, and may be alternatively implemented by using other specific components. Details are not listed in this application.

In a possible implementation, the transceiver apparatus may further include N first switches, and the N first antennas are connected to the N first satellite communication system transmit paths and the N first satellite positioning system receive paths by using the N first switches in a one-to-one manner, where the first switch may be a single-pole double-throw switch.

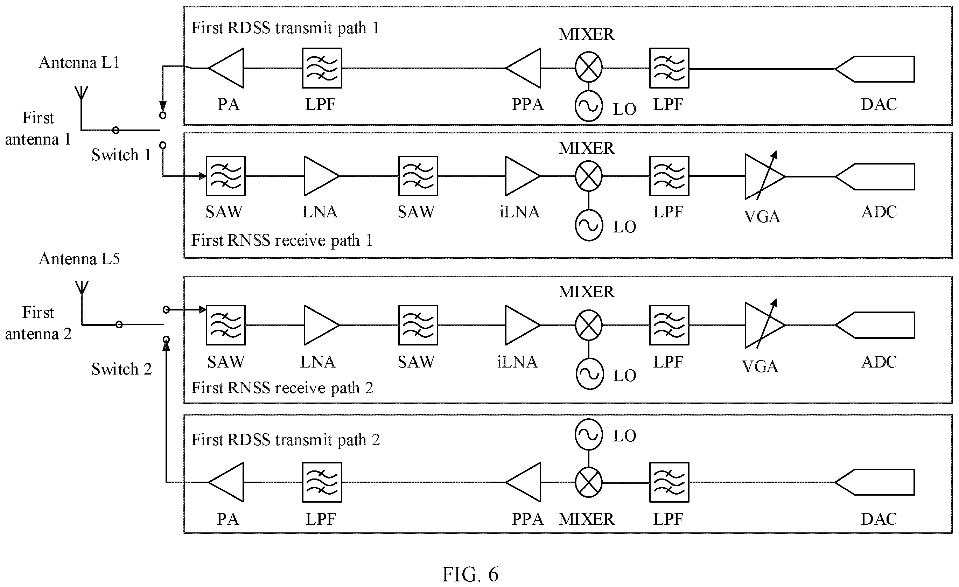

An example in which the first RDSS transmit path includes a DAC, an LPF, a MIXER, an LO, a PPA, and a PA, the first RNSS receive path includes a SAW, an LNA, an iLNA, a MIXER, an LO, an LPF, a VGA and an ADC, and the transceiver apparatus includes two (N=2) first antennas, two first switches, two first RDSS transmit paths, and two first RNSS receive paths is used for description. The transceiver apparatus may be shown in FIG. 6. Each first switch may include a first end, a second end, and a third end. The first end is connected to the first antenna, the second end is connected to the first RDSS transmit path, and the third end is connected to the first RNSS receive path. When the first end is connected to the second end, the first antenna is connected to the first RDSS transmit path. When the first end is connected to the third end, the first antenna is connected to the first RNSS receive path. That is, the first RDSS transmit path and the first RNSS receive path may share the first antenna by using the first switch. For example, the first antenna 1 is connected to each of the first RDSS transmit path 1 and the first RNSS receive path 1 by using the first switch 1. An end that is of the first switch 1 and that is connected to the first antenna 1 may be understood as the first end, an end that is of the first switch 1 and that is connected to the first RDSS transmit path 1 may be understood as the second end, and an end that is of the first switch 1 and that is connected to the first RNSS receive path 1 may be understood as the third end.

In addition, a receive frequency and a transmit frequency of the RDSS are respectively 2.4 GHz and 1.6 GHz, and frequency bands corresponding to an L1 frequency band antenna, an L2 frequency band antenna, and an L5 frequency band antenna of the RNSS are respectively from 1.559 GHz to 1.610 GHz, from 1.215 GHz to 1.300 GHz, and from 1.164 GHz to 1.215 GHz, and are close to the transmit frequency of the RDSS. Therefore, in this embodiment of this application, the antenna of the first RNSS receive path may be reused to transmit an RDSS signal. To be specific, when N is less than or equal to 3, the N first antennas are N of the L1 frequency band antenna, the L2 frequency band antenna, and the L5 frequency band antenna of the RNSS. For example, as shown in FIG. 6, when N is 2, the two first antennas may be respectively the L1 frequency band antenna and the L5 frequency band antenna of the RNSS.

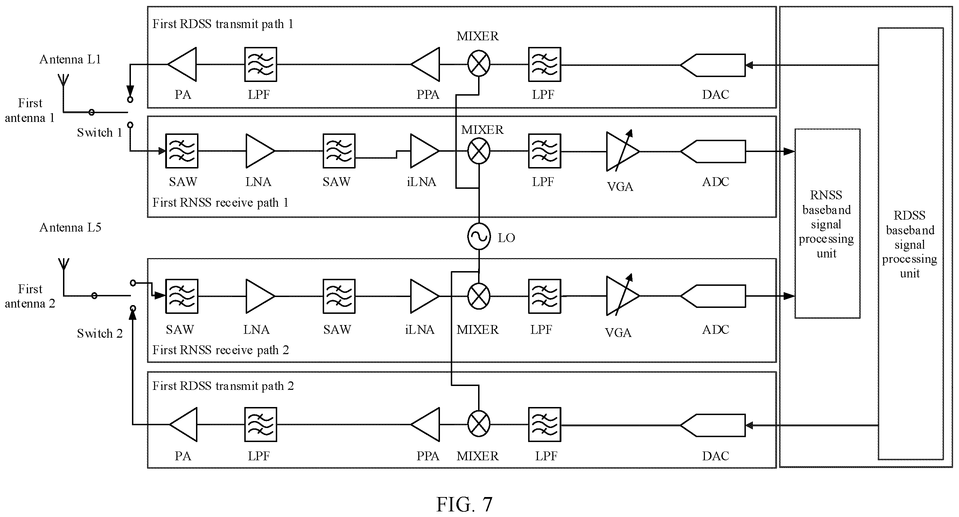

It may be understood that, to further improve integration of the transceiver apparatus and reduce the size of the transceiver apparatus, as shown in FIG. 7, the N first RDSS transmit paths may be connected to a same RDSS baseband signal processing unit, and the same RDSS baseband signal processing unit provides signals for the N first RDSS transmit paths. Similarly, the N first RNSS receive paths may be connected to a same RNSS baseband signal processing unit, and the RNSS baseband signal processing unit processes RNSS signals received by the N first RNSS receive paths. The RNSS baseband processing unit is mainly responsible for processing an RNSS baseband signal of an L1/L5 frequency, and the RNSS baseband processing unit may include submodules such as a digital front end (digital front end, DFE), an acquisition module (acquisition module, ACQ), a tracking module (tracking module, TRK), and the like. The RDSS baseband processing unit is mainly responsible for processing a multi-antenna RDSS baseband signal, including receiving and transmitting. A receiving process is similar to that of the RNSS baseband processing unit, but multi-antenna parallel processing is added. A transmitting process includes multi-path RDSS signal assembly, shaping and filtering, interpolation filtering, and the like.

In some embodiments, to ensure synchronization of transmitted signals of a plurality of first RDSS transmit paths, as shown in FIG. 7, the N first RDSS transmit paths may be connected to a same LO, and the same LO provides clock signals for the plurality of N first RDSS transmit paths. In addition, to further improve integration of the transceiver apparatus, the LO may further be connected to the N first RNSS receive paths, and may provide a clock signal for the N first RDSS transmit paths and the N first RNSS receive paths in a frequency division manner.

It should be understood that the LO may alternatively be replaced with a phase-locked loop (phase-locked loop, PLL), and the PLL provides a clock signal (which may also be referred to as an LO signal) for each of the N first RDSS transmit paths and the N first RNSS receive paths in a frequency division manner.

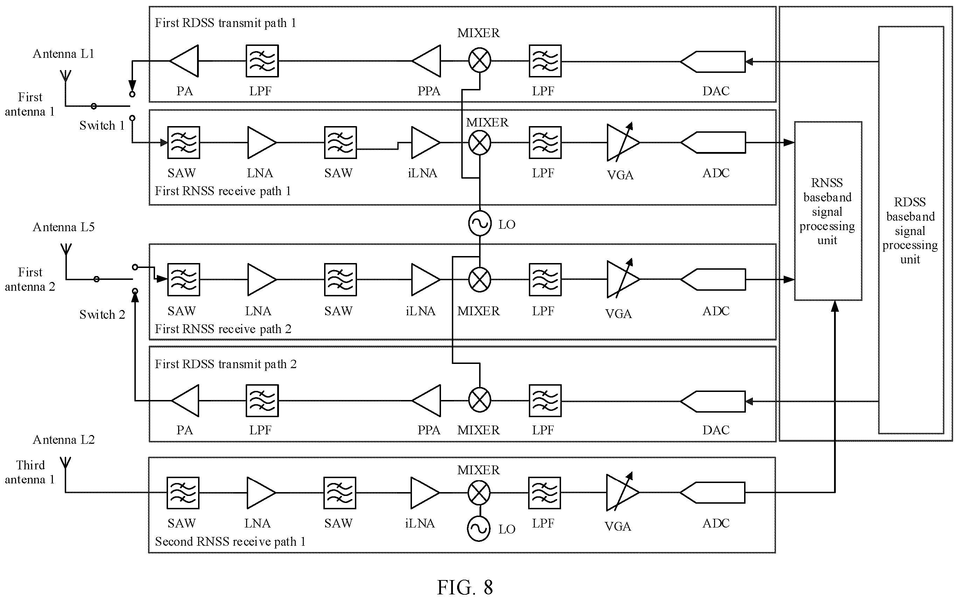

In some implementations, to avoid a problem that an RNSS signal cannot be received during RDSS signal transmission because an antenna of the first RNSS receive path is used by the first RDSS transmit path, the transceiver apparatus may further include an RNSS receive path that does not share an antenna with the RDSS transmit path. For example, the transceiver apparatus includes O second RNSS receive paths, where O is an integer greater than or equal to 0. According to the transceiver apparatus shown in FIG. 8, on the basis of the transceiver apparatus shown in FIG. 7, the transceiver apparatus further includes one (O=1) second RNSS receive path and a third antenna that do not share an antenna with the RDSS transmit path. The transceiver apparatus shown in FIG. 8 can support an RNSS receive path (for example, a second RNSS receive path 1) and an RDSS transmit path (for example, a first RDSS transmit path 1 and a first RDSS transmit path 2) in operating at the same time. During operating of the RDSS transmit path, the RNSS receive path can also normally receive an RNSS signal to ensure that positioning is not lost.

In addition, to further reduce a requirement for a PA and increase transmission strength of the RDSS signal, the transceiver apparatus may further include M second RDSS transmit paths and M second antennas. The M second antennas are connected to the M second RDSS transmit paths in a one-to-one manner, and M is an integer greater than or equal to 1. Each of the M second antennas is configured to send a signal of the connected second RDSS transmit path.

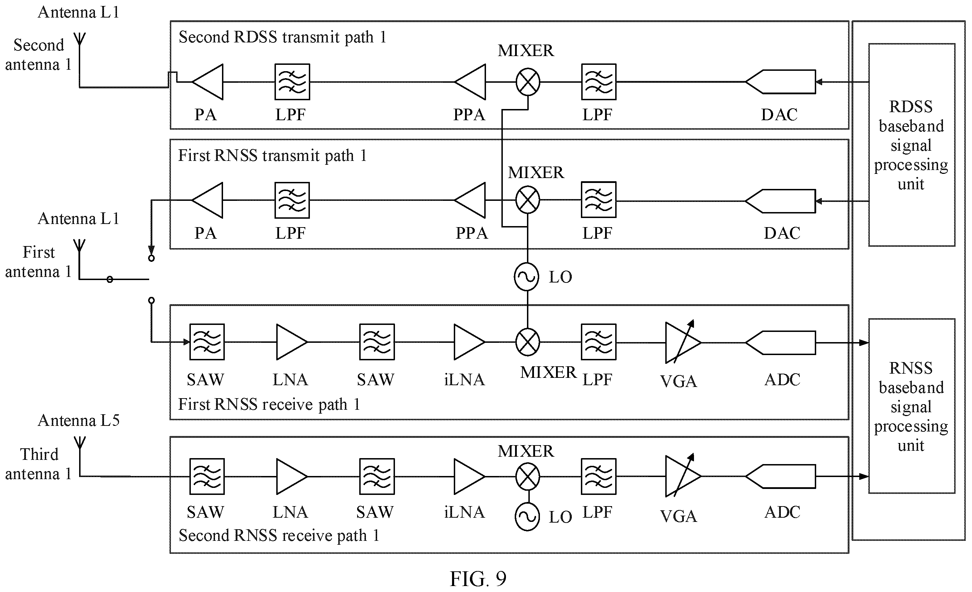

In an example in which M is equal to 1, as shown in FIG. 9, the transceiver apparatus may include a first RDSS transmit path 1 and a first RNSS receive path 1 that share a first antenna (an L1 frequency band antenna), a second RDSS transmit path 1 that is separately connected to a second antenna 1 (for example, another L1 frequency band antenna), and a second RNSS receive path 2 that is separately connected to a third antenna 1 (an L5 frequency band antenna).

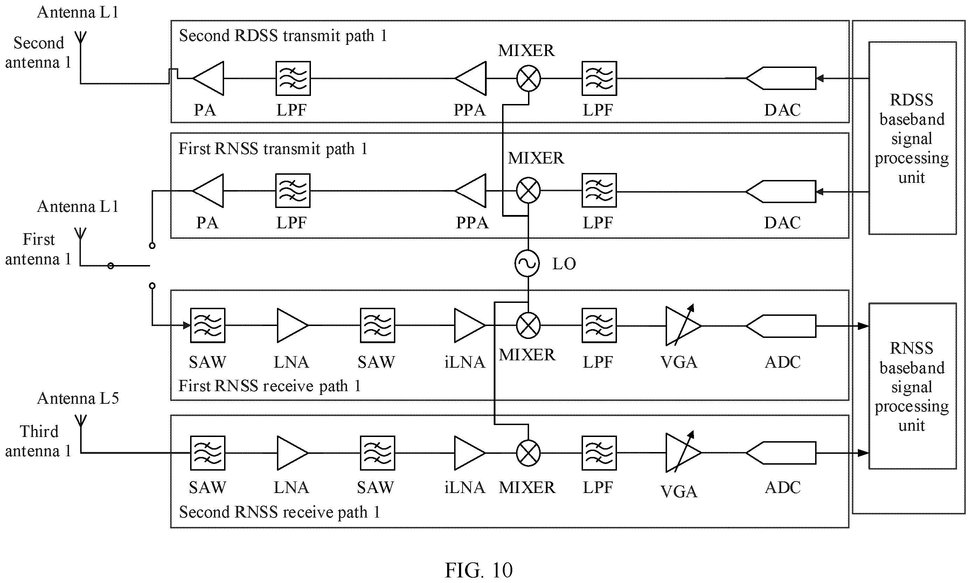

In addition, to ensure synchronization of transmitted signals of a plurality of first RDSS transmit paths, as shown in FIG. 9 and FIG. 10, N (for example, N is 1 in FIG. 9 and FIG. 10) first RDSS transmit paths and M (for example, M is 1 in FIG. 9 and FIG. 10) second RDSS transmit paths may be connected to a same LO, and the same LO provides clock signals for the N first RDSS transmit paths and the M second transmit paths.

In addition, to further improve integration of the transceiver apparatus, as shown in FIG. 10, the N first RNSS receive paths and the O (for example, O is 1 in FIG. 10) second RNSS receive paths may further share the same LO with the N first RDSS transmit paths and the M second RDSS transmit paths, and the LO may provide a clock signal for each of the N first RDSS transmit paths and the M second RDSS transmit paths and each of the N first RNSS receive paths and the O second RNSS receive paths in a frequency division manner.

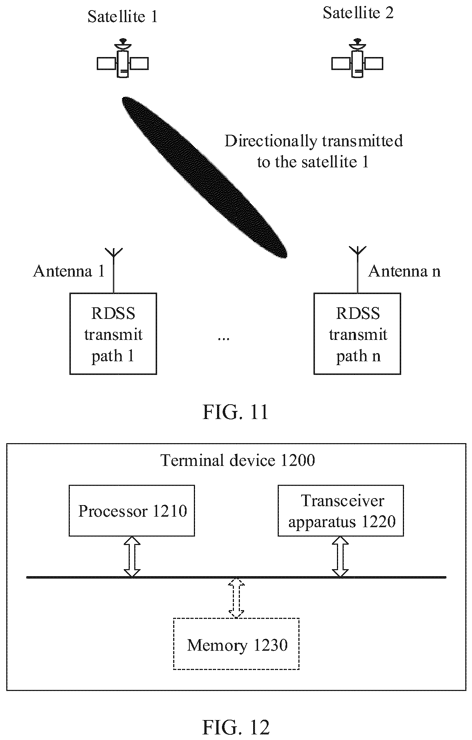

FIG. 11 is a diagram of transmitting an RDSS signal. In this embodiment of this application, n antennas connected to n (n is N or N+M) RDSS transmit paths may transmit an RDSS signal (that is, a signal of the RDSS) to a specific satellite (for example, a satellite 1) by using a technology such as beam forming, so that an RDSS signal transmission gain can be increased. In comparison with a transmission manner of an existing single RDSS transmit path, a requirement of the RDSS transmit path for a PA can be further reduced, and an EIRP value required for transmitting the RDSS signal is reached. In a case in which an RDSS TX link shown in FIG. 11 includes two RDSS transmit paths and two antennas, in comparison with the RDSS TX link shown in FIG. 4, signal sensitivity can be stably increased by 2 dB to 3 dB.

Based on a same technical concept, as shown in FIG. 12, an embodiment of this application further provides a terminal device 1200, including a processor 1210 and a transceiver apparatus 1220 shown in any one of FIG. 5 to FIG. 9. The processor 1210 and the transceiver apparatus 1220 are coupled to each other. The transceiver apparatus 1220 may be configured to receive a signal from another device (such as a satellite or a base station) other than the terminal device, and transmit the signal to the processor 1210, or send a signal from the processor 1210 to another device other than the terminal device.

Optionally, the terminal device 1200 may further include a memory 1230, configured to store instructions executed by the processor 1210, store input data needed by the processor 1210 to run instructions, or store data generated after the processor 1210 runs instructions. The memory 1230 may be a physically independent unit, or may be coupled to the processor 1210, or the processor 1210 includes the memory 1230.

A specific connection medium between the processor 1210, the transceiver apparatus 1220, and the memory 1230 is not limited in this embodiment of this application. In this embodiment of this application, an example in which the processor 1210, the transceiver apparatus 1220, and the memory 1230 are connected through a bus is used in FIG. 12. The bus is represented by using a bold line in FIG. 12. A connection manner of the bus is merely an example for description, and is not limited thereto. The bus may be classified into an address bus, a data bus, a control bus, and the like. For ease of representation, only one bold line is used to represent the bus in FIG. 12, but this does not mean that there is only one bus or only one type of bus.

In this application, it should be understood that the disclosed device may be implemented in another manner. For example, the described apparatus embodiments are merely examples. For example, the units or the division of units is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or the units may be implemented in an electrical or another form.

Various functional units in embodiments of this application may be integrated into one processing unit, or various units may be independent physical modules.

When the integrated unit is implemented in a form of a software function unit and sold or used as an independent product, the integrated unit may be stored in a computer-readable storage medium. Based on such an understanding, all or some of the technical solutions of this application may be implemented in a form of a software product. The computer software product is stored in a storage medium and includes several instructions for instructing a computer device (which may be, for example, a personal computer, a server, or a network device) or a processor (processor) to perform all or some of the steps of the methods described in embodiments of this application. The foregoing storage medium includes: any medium that can store program code, such as a universal serial bus flash drive (universal serial bus flash drive), a removable hard disk, a read-only memory (read-only memory, ROM), a random access memory (random access memory, RAM), a magnetic disk, or an optical disc.

Although example embodiments of this application are described, persons skilled in the art can make changes and modifications to these embodiments after they learn of a basic inventive concept. Therefore, the following claims are intended to be construed as to cover the example embodiments and all changes and modifications falling within the scope of this application.

Clearly, persons skilled in the art can make various modifications and variations to embodiments of this application without departing from the spirit and scope of embodiments of this application. This application is intended to cover these modifications and variations of embodiments of this application provided that they fall within the scope of the claims of this application and their equivalent technologies.

## Claims

1. A transceiver apparatus, comprising N first satellite communication system transmit paths, N first satellite positioning system receive paths, and N first antennas, wherein the N first antennas are connected to the N first satellite communication system transmit paths and the N first satellite positioning system receive paths in a one-to-one manner, and N is an integer greater than or equal to 1; and
each of the N first antennas is configured to send a signal of the connected first satellite communication system transmit path, or is configured to send a signal from a satellite positioning system to the connected first satellite positioning system receive path.

2. The apparatus according to claim 1, wherein N is less than or equal to 3, and the N first antennas are N of an L1 frequency band antenna, an L2 frequency band antenna, and an L5 frequency band antenna in the satellite positioning system.

3. The apparatus according to claim 1, wherein the transceiver apparatus further comprises a local oscillator LO, and the LO is connected to the N first satellite communication system transmit paths.

4. The apparatus according to claim 1, wherein an LO is further connected to the N first satellite positioning system receive paths.

5. The apparatus according to claim 1 or 2, wherein the apparatus further comprises M second satellite communication system transmit paths and M second antennas, the M second antennas are connected to the M second satellite communication system transmit paths in a one-to-one manner, and M is an integer greater than or equal to 1; and
each of the M second antennas is configured to send a signal of the connected second satellite communication system transmit path.

6. The apparatus according to claim 5, wherein the transceiver apparatus further comprises an LO, and the LO is connected to the N first satellite communication system transmit paths and the M second satellite communication system transmit paths.

7. The apparatus according to claim 6, wherein the LO is further connected to the N first satellite positioning system receive paths.

8. The apparatus according to claim 7, wherein the first satellite communication system transmit path and the second satellite communication system transmit path are radio determination satellite system RDSS transmit paths.

9. The apparatus according to any one of claims 1 to 8, wherein the first satellite positioning system receive path is a radio navigation satellite system RNSS receive path.

10. A terminal device, comprising the transceiver apparatus according to any one of claims 1 to 9.
